# EUROPEAN PATENT APPLICATION

(11) **EP 2 491 885 A1**
(43) Date of publication of application: **29.08.2012**
(21) Application number: 10842772.5
(22) Date of filing: 29.11.2010
(51) Int. Cl.: A61C 8/00, A61C 13/263, A61C 13/265, A61C 13/277, A61C 5/08

(54) **IMPLANT DEVICE HAVING FIRM FASTENING STRUCTURE BETWEEN ABUTMENT AND ZIRCONIA CAP**

(71) Applicant: Orapix Co. Ltd, Seoul 153-023 (KR)
(72) Inventor: KWON, Ha Ja, Yongin-si Gyeonggi-do 449-160 (KR); KANG, Seok Jin, Yongin-si Gyeonggi-do 449-160 (KR); SONG, Kyung Jun, Seongnam-si Gyeonggi-do 462-152 (KR)
(74) Representative: Hano, Christian
(86) International application number: PCT/KR2010/008490
(87) International publication number: WO 2012/074144

(57) **Abstract**

Provided is an implant apparatus having a strong coupling structure between an abutment and a zirconia cap. The implant apparatus includes: a fixture that is fixed to an alveolar bone that is placed in an area from which a tooth has been lost; an abutment that is coupled on top of the fixture and on the outer surface of which at least one coupling protrusion is formed; a zirconia cap on the inner surface of which at least one coupling groove is formed in correspondence to the at least one coupling protrusion of the abutment and that is fixedly coupled so as to surround the outer surface of the abutment; a fixing screw that secures the zirconia cap coupled with the abutment to the fixture; and an artificial crown that is fixedly coupled with the upper portion of the zirconia cap.

## Description

### [Technical Field]

The present invention relates to an implant apparatus that is used for dental treatment, and more particularly, to an implant apparatus having a strong coupling structure between an abutment and a zirconia cap that are used for implant treatment.

### [Background Art]

In general, implant apparatuses are used for implanting artificial teeth in order to replace lost teeth. Unlike conventional prostheses or dentures, the implant apparatuses do not make the surrounding tooth tissue damaged. In addition, since the implant apparatuses are similar to the natural teeth in their functions and forms and also have relatively long lives, the artificial teeth implanting treatment that uses the implant apparatuses is a currently emerging high-technology dental treatment.

The implant apparatus includes: a screw-type fixture that is buried and implanted into an alveolar bone that is placed in an area from which a tooth has been lost; and an abutment that is coupled on the upper portion of the fixture that is used as a pillar around the external crown of which an artificial crown is worn, in which the artificial crown is fixed by the abutment in the mouth and realizes the same form and function as those of natural tooth.

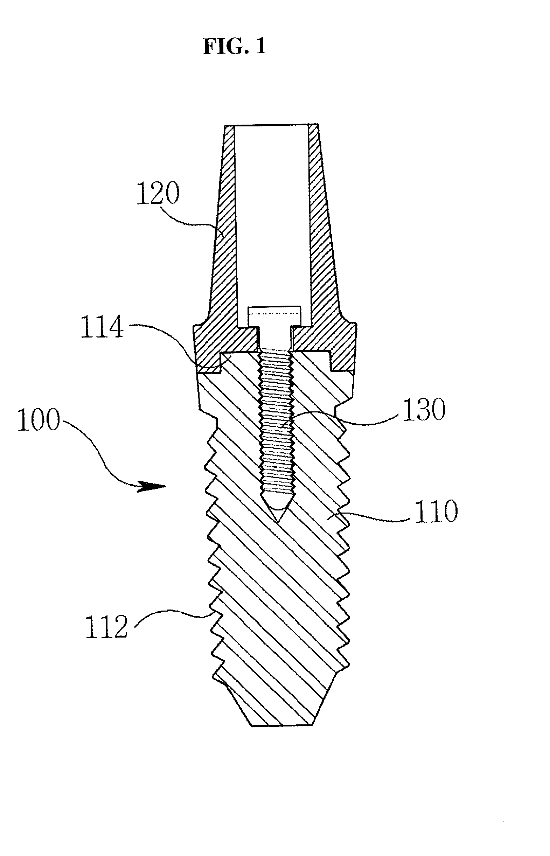

FIG. 1 is a cross-sectional view for explaining a conventional implant apparatus.

Referring to FIG. 1, a conventional implant apparatus 100 includes: a fixture 110, an abutment 120 and a screw 130. An artificial crown is fitted from the top of the abutment but is not shown.

The fixture 110 is inserted into an alveolar bone to then be screw-combined therein. To do this, the thread 112 of a screw is protrudingly formed in the lengthy and vertical directions of the fixture 110. An abutment coupler 114 is formed on top of the fixture 110.

The lower portion of the abutment 120 is positioned at and inserted into the abutment coupler 114 of the fixture 110. The inner portion of the abutment 120 is formed in a hollow form so that an artificial crown (not shown) is inserted into and fixed to the inner portion of the abutment 120.

The screw 130 is engaged with the fixture 110 through the abutment 120. In more detail, the screw 130 passes through the lower portion of the abutment 120 to then be inserted into and engaged with the upper portion of the fixture 110. Accordingly, the abutment 120 is fixed to the fixture 110.

The fixture 110 of the implant apparatus 100 having the above-described configuration is buried and implanted into an alveolar bone of a patient. If time passes at a state where the fixture 110 has been buried and implanted into the alveolar bone, osteoblasts for bone formation of the alveolar bone cling to the thread 112, to then make a symphysis progress. Accordingly, the fixture 110 is fixed to the alveolar bone.

The dental treatment using the conventional implant apparatus will be described as follows. If a tooth is damaged, the upper surface of the damaged tooth is removed and then is surrounded with a metal cap (not shown). Then, the damaged tooth is recovered with an artificial crown. Here, an aesthetic appreciation between the recovered tooth and the gum is not good because of quality of the metal material that is shone out of the recovered tooth.

Thus, there is a tendency to use a zirconia cap whose color is similar to that of teeth instead of the recent metal cap considering an esthetic appreciation after having performed dental treatment.

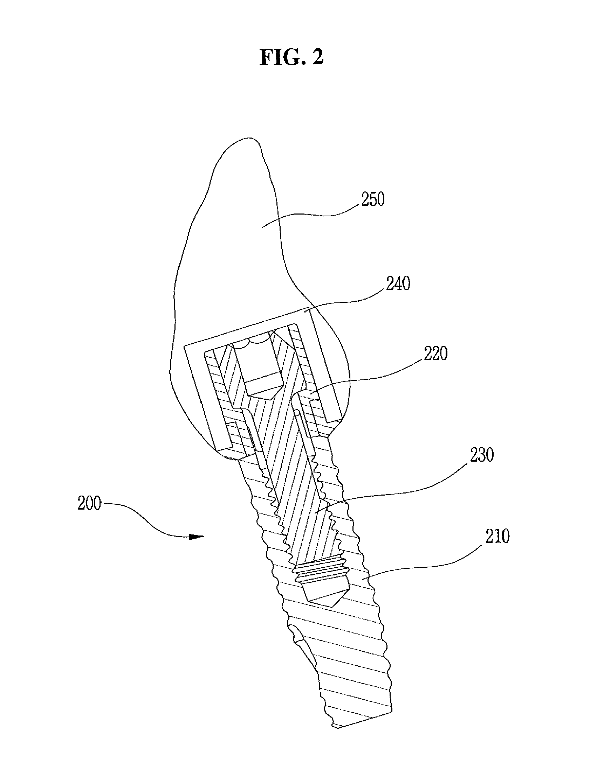

FIG. 2 is a cross-sectional view for explaining an implant apparatus using a zirconia cap.

Referring to FIG. 2, in the case of the implant apparatus 200, a fixture 210 is implanted into and fixed to an alveolar bone of a patient, and then an abutment 220 is placed on top of the fixture 210. Thereafter, the abutment 220 is worn with a zirconia cap 240. Then, a fixing screw 230 of a titanium alloy is used in order to join the fixture 210, the abutment 220 placed on top of the fixture 210, and the zirconia cap 240.

Accordingly, after the abutment 220 and the zirconia cap 240 have been completely fixed to the fixture 210 by the fixing screw 230, an artificial crown 250 is recovered on top of the zirconia cap 240.

In the case of the aforementioned implant treatment, the zirconia cap 240 is covered on top of the abutment 220. In doing so, an adhesive is used between the abutment 220 and the zirconia cap 240 to attach the abutment 220 to the zirconia cap 240.

Since the abutment 220 is made of a metal, it is not easy to bond the abutment 220 to the zirconia cap 240 in view of the metallic feature of the abutment 220. Thus, there is a problem that the abutment 220 is not attached to the zirconia cap 240 firmly.

Thus, even though the implant treatment has been completed, there is a problem that a robust and stable coupling state between the abutment 220 and the zirconia cap 240 cannot be maintained due to a repetitive masticatory movement.

### [Disclosure]

### [Technical Problem]

To solve the above conventional problems or defects, it is an object of the present invention to provide an implant apparatus that can firmly couple an abutment and a zirconia cap in which coupling at least one protrusion is formed on the abutment and at least one coupling groove is formed on the inner surface of the zirconia cap, in correspondence to the at least one coupling protrusion.

It is another object of the present invention to provide an implant apparatus that can maintain a stable coupling state although a repetitive masticatory movement occurs since an abutment and a zirconia cap are firmly engaged with each other to then be finally coupled with an artificial crown.

### [Technical Solution]

To accomplish the above and other objects of the present invention, there is provided an implant apparatus comprising:
a fixture that is fixed to an alveolar bone that is placed in an area from which a tooth has been lost;
an abutment that is coupled on top of the fixture and on the outer surface of which at least one coupling protrusion is formed;
a zirconia cap on the inner surface of which at least one coupling groove is formed in correspondence to the at least one coupling protrusion of the abutment and that is fixedly coupled so as to surround the outer surface of the abutment;
a fixing screw that secures the zirconia cap coupled with the abutment to the fixture; and
an artificial crown that is fixedly coupled with the upper portion of the zirconia cap.

Preferably but not necessarily, the coupling groove of the zirconia cap comprises: a first groove that is formed on the inner surface of the zirconia cap along the lengthy direction of the zirconia cap; and a second groove that is bent from the first groove.

Preferably but not necessarily, the zirconia cap is processed by a processing jig having a processing hole having the same shape as that of the coupling groove; and a ball mill that moves along the processing hole to form the coupling groove.

Preferably but not necessarily, the processing hole comprises: a first processing hole corresponding to the first groove of the zirconia cap; and a second processing hole corresponding to the second groove of the zirconia cap.

Preferably but not necessarily, the abutment comprises:
a throughhole that is formed in a substantially cylindrical body of the abutment so that the fixing screw passes through the throughhole;
a zirconia cap coupler that is protrudingly formed by an identical width along the outer surface of the abutment perpendicularly to the lengthy direction of the abutment; and
a fixture coupler that is formed slantly toward the center of the zirconia cap coupler from the leading end of the zirconia cap coupler.

### [Advantageous Effects]

Therefore, an implant apparatus according to the present invention enables a zirconia cap to be coupled with an abutment in a dental implant treatment for a patient, to thereby provide an aesthetic effect as well as a robust coupling structure between the zirconia cap and the abutment.

In addition, since the zirconia cap and the abutment are strongly coupled with each other, and although a repetitive masticatory movement occurs for a long time after an artificial crown has been coupled with the zirconia cap, a stable state of the implant apparatus can be maintained to thus enhance an implant treatment effect.

### [Description of Drawings]

FIG. 1 is a cross-sectional view for explaining a general implant apparatus.
FIG. 2 is a cross-sectional view for explaining a conventional implant apparatus using a zirconia cap.
FIG. 3 is an exploded perspective view for describing an implant apparatus according to an embodiment of the present invention.
FIG. 4 is an assembled perspective view for describing the implant apparatus according to the embodiment of the present invention.
FIG. 5 is a perspective view showing an abutment in accordance with the present invention.
FIGS. 6 and 7 are a perspective view and a partially cross-sectional view showing the zirconia cap according to the present invention, respectively.
FIG. 8 is a perspective view showing a processing jig for processing the zirconia cap according to the present invention.
FIGS. 9 and 10 are referenced perspective views for describing the zirconia cap that is processed by the processing jig of FIG 8.

### [Best Mode]

The above and/or other objects and/or advantages of the present invention will become more apparent by the following description.

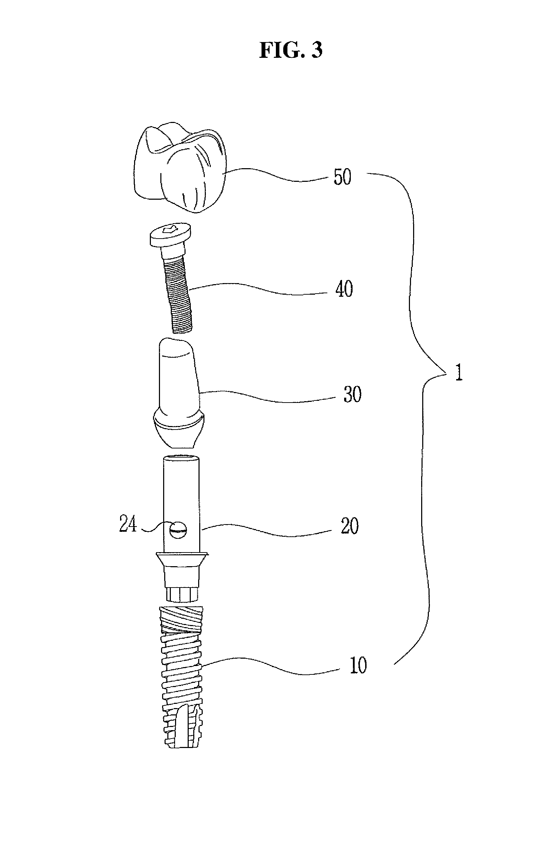

Hereinbelow, an implant apparatus according to a preferred embodiment of the present invention will be described in detail with reference to the accompanying FIGS. 3 to 8.

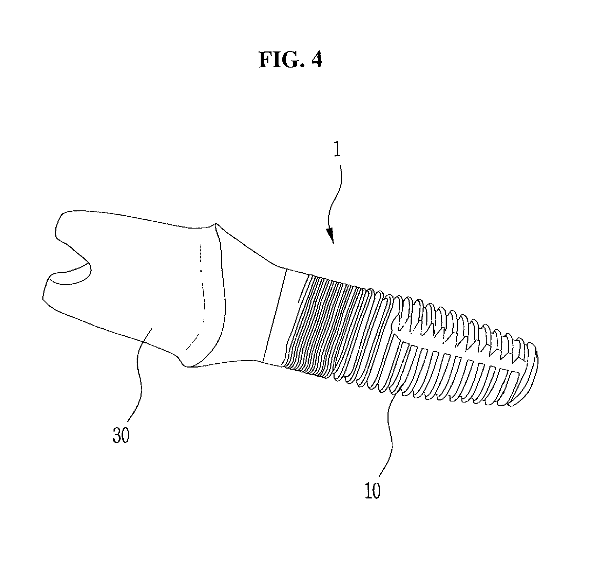

FIG. 3 is an exploded perspective view for describing an implant apparatus according to an embodiment of the present invention. FIG. 4 is an assembled perspective view for describing the implant apparatus according to the embodiment of the present invention.

Referring to FIG. 3, the implant apparatus 1 includes: a fixture 10 that is fixed to an alveolar bone; an abutment 20 having a circular coupling protrusion 24 on the outer surface thereof; a zirconia cap 30 on the inner surface of which a coupling groove is formed in correspondence to the coupling protrusion of the abutment 20 and that is coupled with the abutment 20; a fixing screw 40; and an artificial crown 50.

The abutment 20 has a substantially cylindrical hollow. The circular coupling protrusion 24 is formed on the outer surface of the abutment 20.

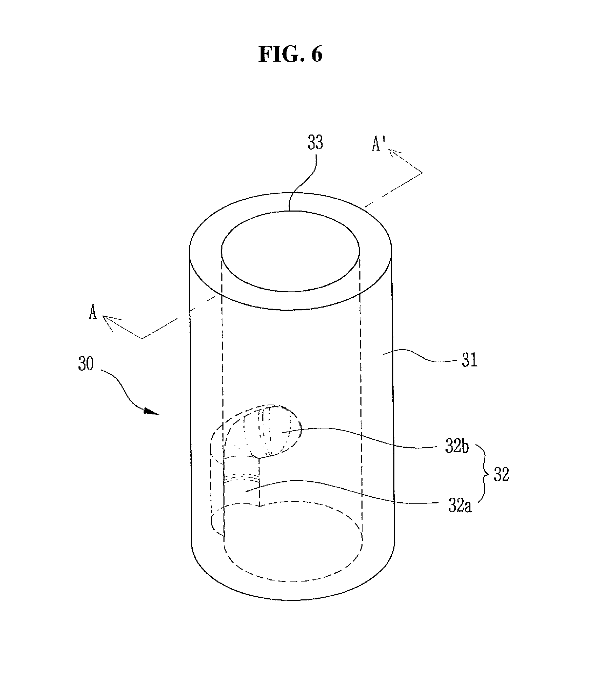

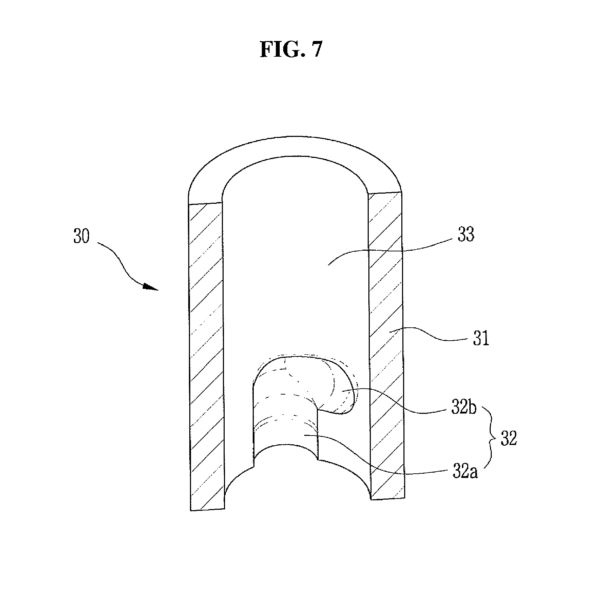

The zirconia cap 30 that is coupled with the abutment 20 to surround the outer surface of the zirconia cap 30 has a cylindrical hole in the inside thereof. A coupling groove 32 of FIGS. 6 and 7 is formed on the inner surface of the hole of the zirconia cap 30. The inner surface of the zirconia cap 30 is formed in a substantially cylindrical shape. The abutment 20 is inserted into and coupled with the zirconia cap 30. The outer-upper portion of the zirconia cap 30 is coupled with the artificial crown 50.

As described above, in the case of the implant apparatus 10, the circular coupling protrusion 24 that is formed on the outer surface of the abutment 20 is made to be integrally coupled with the coupling groove that is formed on the inner surface of the zirconia cap 30. Then, the integrally coupled abutment 20 and zirconia cap 30 are placed on the upper portion of the fixture 10 that is implanted into the alveolar bone and are fixed to the fixture 10 by the fixing screw 40.

Then, as shown in FIG. 4, the implant apparatus 1 of the state where the outer-upper portion of the zirconia cap 30 is not covered with the artificial crown 50 is completed. In other words, the fixture 10 that is implanted into the alveolar bone is coupled with the zirconia cap 30 into which the abutment 20 has been inserted in which the abutment 20 has been fixed to the zirconia cap 30 by the fixing screw 40 therein.

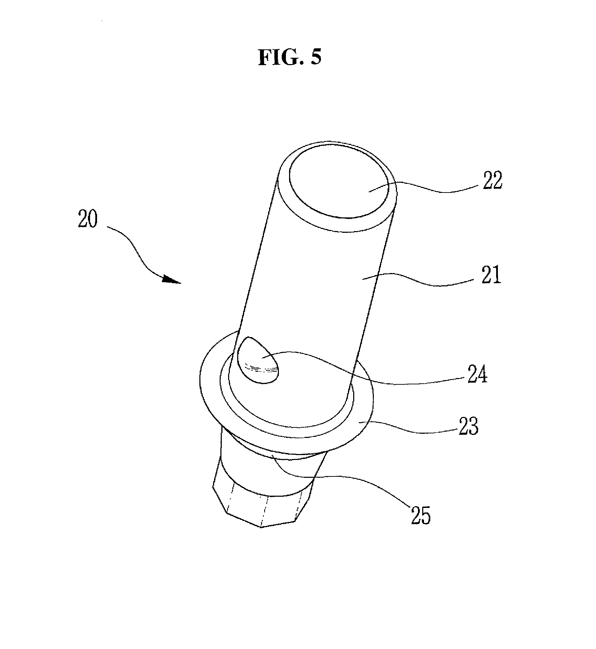

Hereinbelow, a coupling structure of the abutment 20 and the zirconia cap 30 will be described in more detail with reference to FIGS. 5 and 6.

FIG. 5 is a perspective view showing an abutment in accordance with the present invention.

Referring to FIG. 5, the abutment 20 has the hole 22 through which the fixing screw 40 passes in a substantially cylindrical body 21. The circular coupling protrusion 24 is formed on the outer surface of the abutment 20. In addition, the abutment 20 includes a zirconia cap coupler 23 that is protrudingly formed by an identical width along the outer surface of the abutment 20 perpendicularly to the lengthy direction of the abutment 20, and a fixture coupler 25 that is formed slantly toward the center of the zirconia cap coupler 23 from the leading end of the zirconia cap coupler 23.

The zirconia cap coupler 23 is a portion with the upper portion of which the zirconia cap 30 is fitted to then be safely mounted, and the fixture coupler 25 is a portion with the lower portion of which the fixture 10 is fitted to then be safely mounted.

In addition, when the zirconia cap 30 is fitted through the upper portion of the abutment 20 so as to surround the outer surface of the body 21 of the abutment 20, the coupling protrusion 24 formed on the outer surface of the abutment 20 is engaged with the coupling groove formed on the inner surface of the zirconia cap 30. Thus, the abutment 20 and the zirconia cap 30 are coupled with each other by the coupling protrusion 24 and the coupling groove 32 of FIG. 6, to thus maintain a strong coupling state.

The zirconia cap 30 having the above-described groove 32 is shown in FIGS. 6 and 7.

FIG. 6 is a perspective view showing the zirconia cap according to the present invention. FIG. 7 is a partially cross-sectional view cut along a line A-A' of FIG. 6.

Referring to FIGS. 6 and 7, the zirconia cap 30 includes a coupling groove 32 formed on the inner surface 33 of a cylindrical body 31 thereof before the cylindrical body 31 is not processed in a shape similarly to that of the artificial crown 50 that is coupled on top of the zirconia cap 30. The coupling groove 32 of the zirconia cap 30 includes: a first groove 32a that is formed on the inner surface 33 of the zirconia cap 30 along the lengthy direction of the zirconia cap 30; and a second groove 32b that is extended from the first groove 32a and formed on the inner surface 33 of the zirconia cap 30 along the circumferential direction of the zirconia cap 30.

When the abutment 20 shown in FIG. 5 is inserted into the inside of the zirconia cap 30, the coupling protrusion 24 of the abutment 20 moves to the upper portion of the zirconia cap 30 along the first groove 32a of the zirconia cap 30 to then be guided into the second groove 32b. By doing so, the coupling protrusion 24 of the abutment 20 is firmly fixed to the second groove 32b of the zirconia cap 30. Accordingly, the coupling protrusion 24 of the abutment 20 is firmly coupled with to the second groove 32b of the zirconia cap 30, by a coupling force between the coupling protrusion 24 of the abutment 20 and the second groove 32b of the zirconia cap 30.

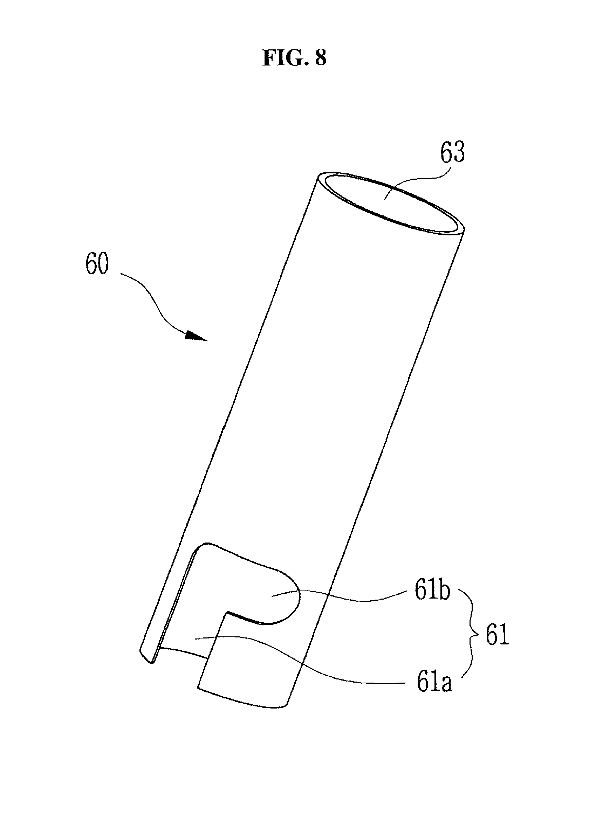

In order to form the coupling groove on the inner surface of the zirconia cap 30, a processing jig shown in FIG. 8 is used.

FIG. 8 is a perspective view showing a processing jig for processing the zirconia cap according to the present invention.

Referring to FIG. 8, the processing jig 60 is made of a metallic material and has a substantially cylindrical hollow 63. The hollow 63 has a diameter that is relatively smaller than that of the zirconia cap 30 so that the processing jig 60 is inserted along the inner surface of the zirconia cap 30 shown in FIG. 6 to process the coupling groove 32.

In addition, the processing jig 60 has a processing hole 61 having the same shape as that of the coupling groove 32 of the zirconia cap 20 in order to form the coupling groove 32 of the zirconia cap 20. The processing hole includes: a first processing hole 61a corresponding to the first groove 32a of the zirconia cap 30; and a second processing hole 61b corresponding to the second groove 32b of the zirconia cap 30.

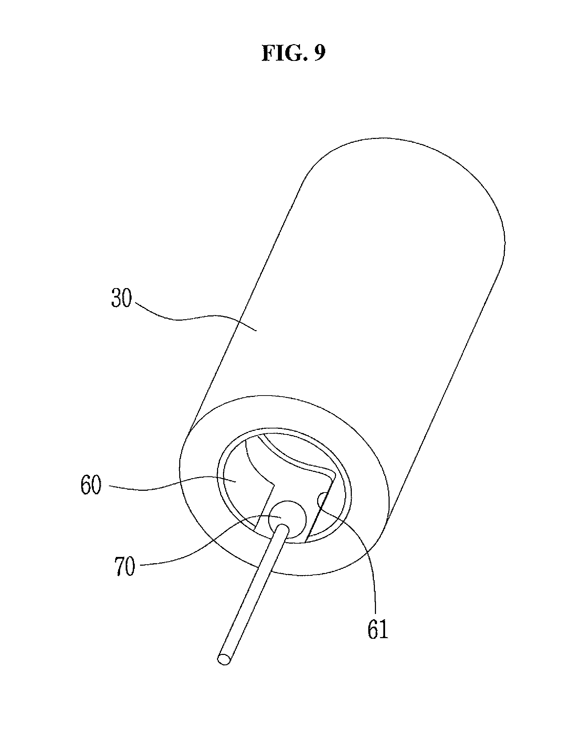

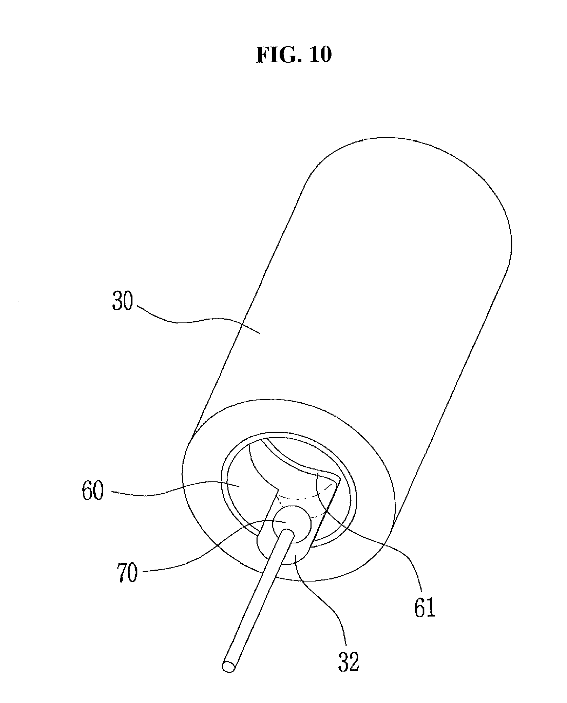

FIGS. 9 and 10 are referenced perspective views for describing the zirconia cap that is processed by the processing jig of FIG 8.

Referring to FIG. 9, the processing jig 60 is inserted along the inner surface of the zirconia cap 30 in order to form the coupling groove 32 of the zirconia cap 30. At a state where the processing jig 60 has been inserted into the zirconia cap 30, the coupling groove 32 is formed on the inner surface of the zirconia cap 30 using a circular ball mill 70 along the processing hole 61 formed on the processing jig 60.

As shown in FIG. 10, the coupling groove 32 is processed and formed on the inner surface of the zirconia cap 30 along the same shape as that of the processing hole 61 formed in the processing jig 60.

Here, the zirconia cap 30 is made to undergo a sintering process after having processed the coupling groove 32 therein, to then be contracted. As a result, the zirconia cap 30 should be enlarged in proportion to the shrinkage. In addition, the coupling groove 32 of the zirconia cap 30 is enlarged to be larger than a diameter of the coupling protrusion 24 of the abutment 20. Thus, the diameter of the ball mill 70 should be larger than that of the coupling protrusion 24 of the abutment 20.

In this manner, the coupling protrusion 24 is formed on the abutment 20 and the coupling groove 32 is formed on the inner surface of the zirconia cap 30. Accordingly, the abutment 20 is firmly coupled with the zirconia cap 30. As a result, although a repetitive masticatory movement occurs for a long time after an artificial crown has been coupled with the zirconia cap, a stable coupling state of the implant apparatus can be maintained.

As described above, the present invention has been described with respect to a particularly preferred embodiment. However, the present invention is not limited to the above embodiment, and it is possible for one who has an ordinary skill in the art to make various modifications and variations, without departing off the spirit of the present invention. Thus, the protective scope of the present invention is not defined within the detailed description thereof but is defined by the claims to be described later and the technical spirit of the present invention.

### [Industrial Applicability]

As described above, the present invention can be applied in an implant apparatus that is used for dental treatment, and can be particularly applied in various coupling structures such as a coupling structure of respective components of the implant apparatus as well as a coupling structure requiring a robust combination between components.

## Claims

1. An implant apparatus comprising:
a fixture that is fixed to an alveolar bone that is placed in an area from which a tooth has been lost;
an abutment that is coupled on top of the fixture and on the outer surface of which at least one coupling protrusion is formed;
a zirconia cap on the inner surface of which at least one coupling groove is formed in correspondence to the at least one coupling protrusion of the abutment and that is fixedly coupled so as to surround the outer surface of the abutment;
a fixing screw that secures the zirconia cap coupled with the abutment to the fixture; and
an artificial crown that is fixedly coupled with the upper portion of the zirconia cap.

2. The implant apparatus according to claim 1, wherein the coupling groove of the zirconia cap comprises: a first groove that is formed on the inner surface of the zirconia cap along the lengthy direction of the zirconia cap; and a second groove that is extended from the first groove and formed on the inner surface of the zirconia cap along the circumferential direction of the zirconia cap.

3. The implant apparatus according to claim 2, wherein the zirconia cap is processed by a processing jig having a processing hole having the same shape as that of the coupling groove; and a ball mill that moves along the processing hole to form the coupling groove.

4. The implant apparatus according to claim 3, wherein the processing hole comprises: a first processing hole corresponding to the first groove of the zirconia cap; and a second processing hole corresponding to the second groove of the zirconia cap.

5. The implant apparatus according to claim 1, wherein the abutment comprises:
a throughhole that is formed in a substantially cylindrical body of the abutment so that the fixing screw passes through the throughhole;
a zirconia cap coupler that is protrudingly formed by an identical width along the outer surface of the abutment perpendicularly to the lengthy direction of the abutment; and
a fixture coupler that is formed slantly toward the center of the zirconia cap coupler from the leading end of the zirconia cap coupler.
